# EUROPEAN PATENT APPLICATION

(11) **EP 2 827 577 A1**
(43) Date of publication of application: **21.01.2015**
(21) Application number: 13761125.7
(22) Date of filing: 15.03.2013
(51) Int. Cl.: H04N 5/225, H04N 5/232

(54) **INFORMATION TERMINAL AND IMAGING CONTROL METHOD**

(30) Priority: 16.03.2012 JP 2012061068
(71) Applicant: NTT Docomo, Inc., Tokyo 100-6150 (JP)
(72) Inventor: WATANABE, Reiji, Tokyo 100-6150 (JP)
(74) Representative: Beder, Jens
(86) International application number: PCT/JP2013/057492
(87) International publication number: WO 2013/137457

(57) **Abstract**

An information terminal according to one embodiment includes a touch panel display including a press detection mechanism capable of accepting a press operation on an operating surface and displaying an image output from an imaging device, a detection means to detect a touch operation and a press operation on the operating surface, a focus control means to control a focus mechanism of the imaging device to set a focus on a subject displayed on the touch panel display when the touch operation is detected by the detection means, and a shutter control means to control a shutter mechanism of the imaging device to perform imaging when a specified press operation is detected by the detection means.

## Description

### Technical Field

The present invention relates to an information terminal and an imaging control method.

### Background Art

An information terminal having a touch panel is commonly used today, and an operation of a camera mounted on the information terminal is performed through the touch panel. For example, a user can set a focus on a desired position simply by looking at an imaging object shown on the touch panel and touching the position to be focused on (i.e. Patent Literature 1, for example). Then, the user presses a shutter button displayed on the touch panel and can thereby take a picture.

Further, in some information terminal, a user can set a focus by touching the operating surface of the touch panel, and a shutter mechanism operates to take a picture at the same time as when the user releases the finger from the operating surface.

### Citation List

### Patent Literature

Patent Literature 1: Japanese Patent Application Laid-Open Publication No. 2004-48526

### Summary of Invention

### Technical Problem

However, in the information terminal according to related art, because the shutter mechanism is activated simultaneously with releasing a finger from the operating surface of the touch panel, it is necessary to take a specified procedure for cancellation when stopping picture taking after focusing or performing another processing (such as exposure adjustment) after focusing, which makes the operation complicated.

In light of the above, an object of the present invention is to provide an information terminal and an imaging control method that can enhance the user-friendliness of a picture taking operation.

### Solution to Problem

An information terminal according to one aspect of the present invention includes a touch panel display configured to include a press detection mechanism capable of accepting a press operation on an operating surface and display an image output from an imaging device, a detection means configured to detect a touch operation that brings a contact object into contact with the operating surface of the touch panel display and a press operation on the operating surface of the touch panel display, a focus control means configured to control a focus mechanism of the imaging device to set a focus on a subject displayed on the touch panel display when the touch operation is detected by the detection means, and a shutter control means configured to control a shutter mechanism of the imaging device to perform imaging when a specified press operation is detected by the detection means.

An imaging control method according to one aspect of the present invention is an imaging control method in an information terminal with a touch panel display including a press detection mechanism capable of accepting a press operation on an operating surface and displaying an image output from an imaging device, the method including a detection step of detecting a touch operation on the operating surface of the touch panel display and a press operation on the operating surface of the touch panel display, a focus control step of controlling a focus mechanism of the imaging device to set a focus on a subject displayed on the touch panel display when the touch operation is detected in the detection step, and a shutter control step of controlling a shutter mechanism of the imaging device to perform imaging when a specified press operation is detected in the detection step.

Because the information terminal and the imaging control method described above have a configuration that allows detection of a press of the touch panel, a user can execute not only a touch operation but also a press operation on the touch panel. The information terminal and the imaging control method control the shutter mechanism of the imaging device by detecting the press operation, not the touch operation, on the touch panel. Thus, because the information terminal and the imaging control method control the shutter mechanism by detecting the press operation, the shutter mechanism is not activated even when a finger or the like touching the touch panel for focusing is released from the touch panel, and picture or video taking is not done. It is thereby possible to easily cancel picture or video taking even after performing processing to set a focus on the subject. As a result, it is possible to enhance the user-friendliness of a picture taking operation.

In one embodiment, the focus control means may control the focus mechanism to fix a focus on a subject displayed on the touch panel display when release of the contact object from the operating surface is detected by the detection means.

According to this configuration, it is possible to release a hand from the touch panel display while fixing a focus on a desired subject, and therefore other settings can be made on the touch panel display.

Further, in one embodiment, the focus control means may control the focus mechanism to fix a focus on a subject displayed on the touch panel display when the specified press operation is detected by the detection means.

According to this configuration, it is possible to release a hand from the touch panel display while fixing a focus on a desired subject, and therefore other settings can be made on the touch panel display.

Further, in one embodiment, the detection means may detect a contact position on the operating surface where a contact is made by the touch operation, and the focus control means may control the focus mechanism to set a focus on a subject displayed at the contact position detected by the detection means among subjects displayed on the touch panel display.

According to this configuration, it is possible to set a focus on a subject selected by a user even when many subjects are displayed on the touch panel display.

Further, in one embodiment, when the contact position detected by the detection means changes, the focus control means nay control the focus mechanism in conjunction with the changing contact position.

According to this configuration, it is possible to maintain a focus on a subject when a user keeps touching an image part corresponding to the position to be focused on in the image displayed on the touch panel. It is thereby possible to activate the shutter mechanism of the imaging device at the moment of a click (press operation), for example, in the state where the subject is focused on, and it is less likely to miss a photo opportunity.

### Advantageous Effects of Invention

According to one aspect of the present invention, it is possible to enhance the user-friendliness of a picture taking operation.

### Brief Description of Drawings

Fig. 1 is an outline view showing an external configuration of a portable terminal according to a first embodiment.
Fig. 2 is a sectional view showing a click mechanism of the portable terminal shown in Fig. 1.
Fig. 3 is a block diagram showing a functional configuration of the portable terminal shown in Fig. 1.
Fig. 4 is a diagram showing an example of an imaging display screen displayed on a touch panel display.
Fig. 5 is a diagram showing a hardware configuration of the portable terminal shown in Fig. 1.
Fig. 6 is a flowchart showing a flow of a camera control process in the portable terminal shown in Fig. 1.
Fig. 7 is a block diagram showing a functional configuration of a portable terminal according to a second embodiment.
Fig. 8 is a flowchart showing a flow of a camera control process in the portable terminal shown in Fig. 7.

### Description of Embodiments

An embodiment of the present invention is described hereinafter with reference to the appended drawings. Where possible, the same elements are denoted by the same reference numerals and redundant description thereof is omitted. The dimension ratio of the drawings does not necessarily coincide with the description. Further, in the description, a term indicating the direction such as "up" and "down" is a term used for the sake of convenience based on the state shown in the drawings.

### (First embodiment)

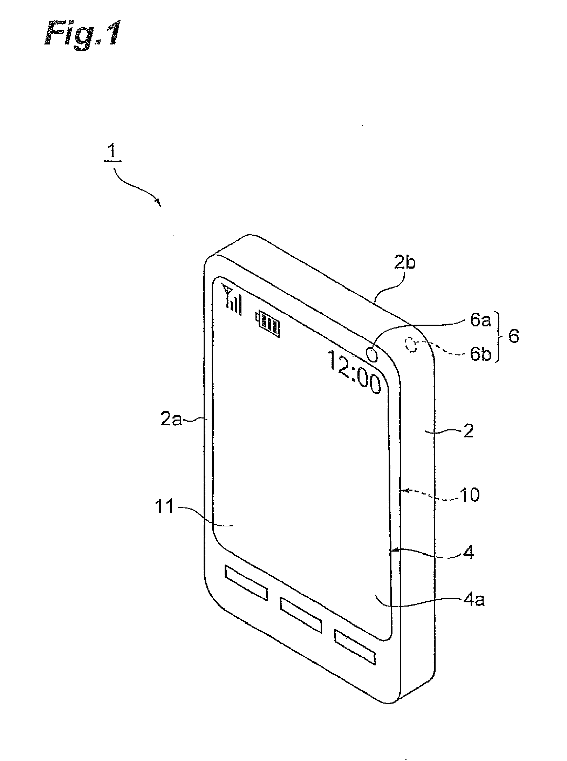

Fig. 1 is an outline view showing an external configuration of a portable terminal according to a first embodiment. As shown in Fig. 1, a portable terminal (information terminal) 1 is a communication terminal having a touch panel display 4, and by touching the touch panel display 4, an operation of a camera (imaging device) mounted on the portable terminal 1, a function corresponding to an object (icon) in an application or the like can be executed. The portable terminal 1 has a click mechanism (press detection mechanism) 10 on the back side of (at the rear of) the touch panel display 4. A user can perform a click operation by pressing the touch panel display 4.

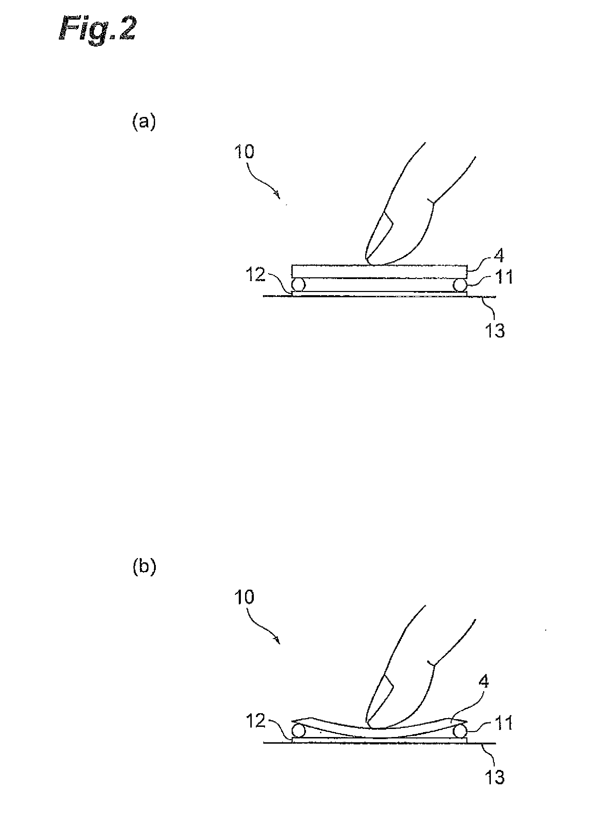

Figs. 2(a) and 2(b) are sectional views showing the click mechanism in the portable terminal. On the backside of an operating surface 4a of the touch panel display 4, the click mechanism 10 for giving a click feeling upon press (press operation) by a user and detecting (accepting) the press is provided. The click mechanism 10 includes a support member 11 that supports the touch panel display 4 on a board 13 and a contact sensor 12 that is mounted on the board 13. In the click mechanism 10, the touch panel display 4 pressed by a user is bent to come into contact with the contact sensor 12 (see Fig. 2(b)) and thereby the press of the touch panel display 4 is detected. It is thereby possible to give the user a click feeling and detect the press. Note that the click mechanism is not limited to the above, and it may have a structure having a tact switch (not shown) or the like mounted on the backside of the touch panel display 4 or on a board (not shown) that supports the touch panel display 4 and movable up and down (in the direction orthogonal to the operating surface), where the tact switch turns on when the touch panel display 4 is pressed down.

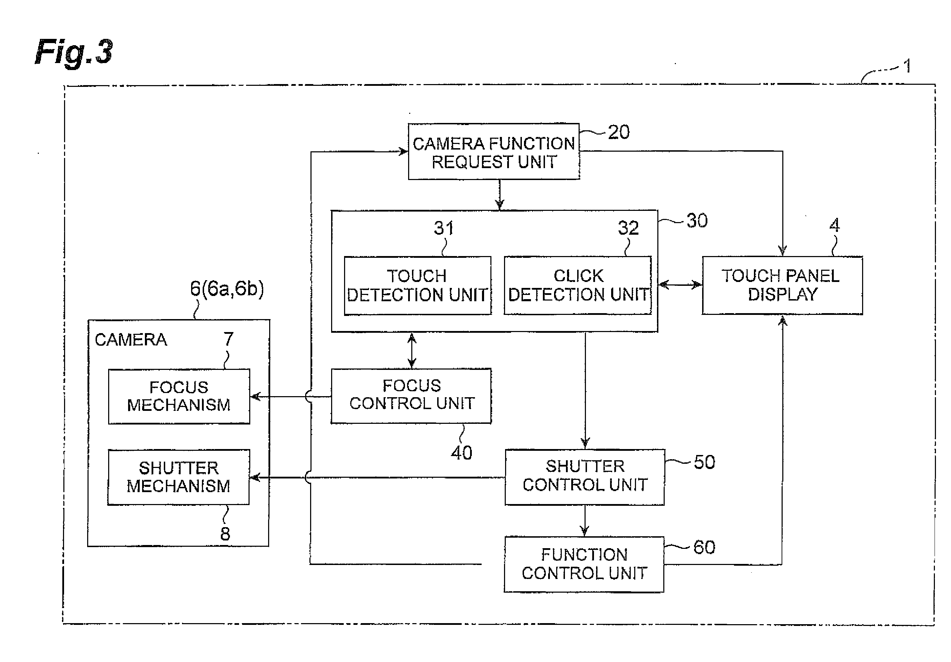

Fig. 3 is a block diagram showing a functional configuration of the portable terminal 1 according to the first embodiment. As shown in Fig. 3, the portable terminal 1 includes a camera 6, the touch panel display 4, a camera function request unit 20, a detection unit (detection means) 30 including a touch detection unit 31 and a click detection unit 32, a focus control unit (focus control means) 40, a shutter control unit (shutter control means) 50, and a function control unit 60. Each component is described hereinbelow.

The camera 6 includes a front camera 6a mounted on a front surface 2a, which is the surface where the touch panel display 4 of a terminal body 2 is mounted, and a rear camera 6a mounted on a rear surface 2b, which is the opposite side of the front surface 2a. The camera 6 mainly includes a lens, a diaphragm, a shutter, an imaging element and the like, and imaging conditions such as an aperture, a shutter speed and ISO sensitivity are adjustable. Further, the camera 6 (6a and 6b) includes a focus mechanism 7 that adjusts a focus of the camera 6 and a shutter mechanism 8 that adjusts opening and closing of a shutter.

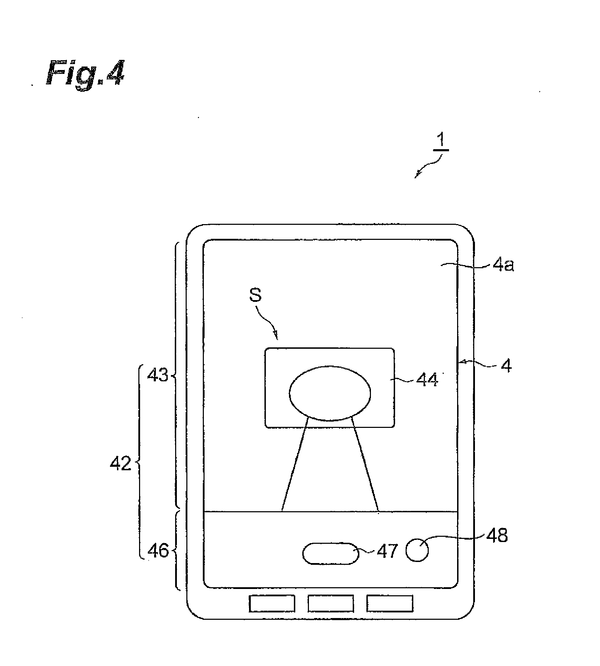

The touch panel display 4 is mounted on one surface 2a of the terminal body 2 and accepts an operation (operation by a finger, a touch pen (contact object) or the like) from a user and displays an image output from the camera 6, which is described later. In the portable terminal 1 according to the first embodiment, the touch panel display 4 receives a signal requesting start of the camera function from the camera function request unit 20, which is described later, and displays an imaging display screen 42 as shown in Fig. 4, for example.

Fig. 4 is a diagram showing an example of the imaging display screen displayed on the touch panel display. The imaging display screen 42 includes an image area 43 to display an image output from the camera 6 and an operation area 46 to display a button or the like for the operation of the camera function.

In the image area 43, a focus frame 44 or the like indicating the position of a subject S to be focused on in the image output from the camera 6 may be displayed. In the operation area 46, a shutter button 47 for controlling the shutter mechanism 8 of the camera 6 and a setting button 48 for starting a screen to set an exposure, ISO (International Organization for Standardization) sensitivity and the like in the camera 6 may be displayed.

The camera function request unit 20 is a part that requests activation of the camera function to the detection unit 30 including the touch detection unit 31 and the click detection unit 32 and the touch panel display 4 when an application using a camera is started. When the event occurs, the camera function request unit 20 outputs a signal for activating the camera function to the detection unit 30 including the touch detection unit 31 and the click detection unit 32, and the touch panel display 4.

The detection unit 30 is a part that detects a touch operation on the operating surface 4a of the touch panel display 4, a contact position on the operating surface 4a by the touch operation, and a click operation on the operating surface 4a of the touch panel display 4. The detection unit 30 includes the touch detection unit 31 and the click detection unit 32.

The touch detection unit 31 is a part that detects a touch operation on the operating surface 4a of the touch panel display 4. This operation can be acquired using a basic function of the touch panel display 4. The touch detection unit 31 outputs contact information on the operating surface 4a of the touch panel display 4 to the focus control unit 40, which is described later.

The click detection unit 32 is a part that detects a click operation on the operating surface 4a of the touch panel display 4. This operation can be acquired by using information from the contact sensor 12 or the like included in the click mechanism 10 described above. The click detection unit 32 detects a click operation on the operating surface 4a of the touch panel display 4 and then outputs information indicating the detection to the shutter control unit 50, which is described later. Further, the click detection unit 32 outputs focus information indicating a subject to be focused on and a focus state output from the focus control unit 40, which is described later, to the shutter control unit 50.

The focus control unit 40 is a part that controls the focus mechanism 7 of the camera 6 to set a focus on the subject displayed on the touch panel display 4 when a touch operation is detected by the detection unit 30. The focus control unit 40 according to the first embodiment controls the focus mechanism 7 of the camera 6 to set a focus on the subject displayed on the touch panel display 4 during a period when a touch operation is detected by the detection unit 30. Note that a contact with the touch panel display 4 is not limited to the shutter button 47 shown in Fig. 4 as long as it is made on the operating surface 4a where a touch operation is detected.

Further, the focus control unit 40 controls the focus mechanism 7 of the camera 6 to fix a focus on the subject S displayed on the touch panel display 4 when release of a user's finger from the operating surface 4a is detected by the touch detection unit 31. Note that, when a touch operation is detected again by the detection unit 30, the focus control unit 40 controls the focus mechanism 7 of the camera 6 to set a focus on the subject S displayed on the touch panel display 4 at that time.

The shutter control unit 50 is a part that controls the shutter mechanism of the camera 6 based on a state of a click on the touch panel display 4 detected by the detection unit 30. The shutter control unit 50 in the portable terminal 1 according to the first embodiment receives a request signal and the focus information output from the click detection unit 32 and controls the shutter mechanism of the camera 6 and thereby takes a picture (performs imaging) with the camera 6.

The function control unit 60 is a part that controls the shutter mechanism 8 of the camera 6 as to whether or not to continue the picture taking after the picture taking with the camera 6 is finished. When the picture taking continues by a user, which is when the application using the camera 6 is not terminated, the function control unit 60 outputs a signal requesting to display the imaging display screen 42 again on the touch panel display 4 to the camera function request unit 20. When the picture taking is finished by a user, which is when the application using the camera 6 is terminated, the function control unit 60 outputs a signal requesting to remove the imaging display screen 42 from the touch panel display 4 to the camera function request unit 20.

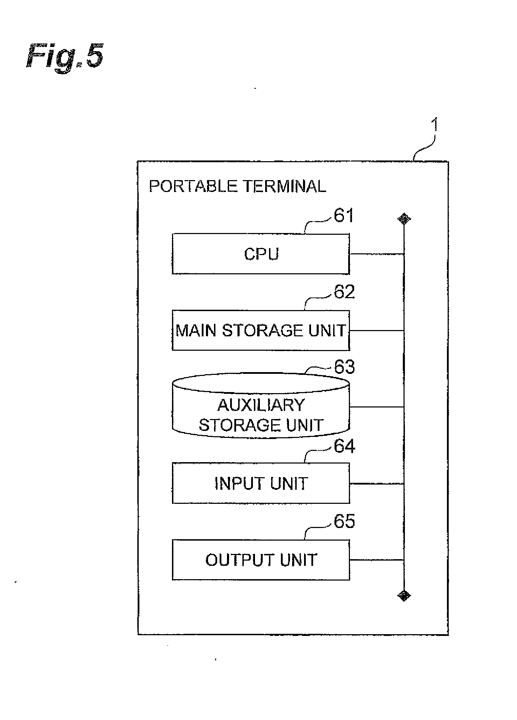

Fig. 5 is a diagram showing a hardware configuration of the portable terminal. As shown in Fig. 5, the portable terminal 1 includes a CPU (central processing unit) 61 that executes the camera control process in the portable terminal 1, which is described later, an operating system, an application program and the like, a main storage unit 62 composed of ROM (read only memory) and RAM (random access memory), an auxiliary storage unit 63 composed of a hard disk, a memory and the like such as the database (see Fig. 1) described above, an input unit 64 such as a menu button and the touch panel display 4 (see Fig. 1), and an output unit 65 such as the touch panel display 4 (see Fig. 1). The functions of the camera function request unit 20, the detection unit 30, the focus control unit 40, the shutter control unit 50 and the function control unit 60 described above are executed by reading given software into the CPU 61 and the main storage unit 62 and making control by the CPU 61 .

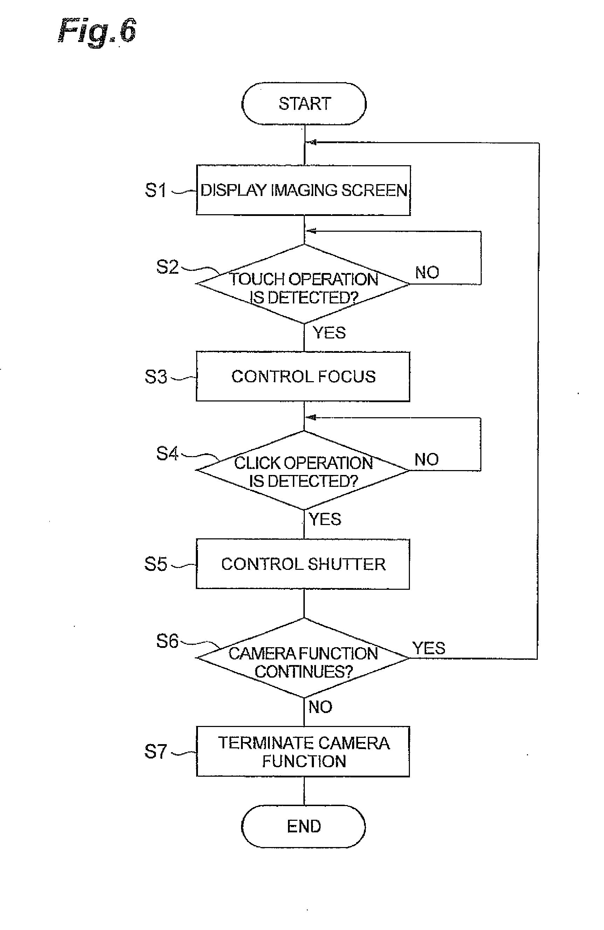

A flow when performing a control method for a camera (imaging control method) according to the first embodiment is described hereinafter with reference to Fig. 6. Fig. 6 is a flowchart showing a flow of a camera control process in the portable terminal.

As shown in Fig. 6, in the portable terminal 1, when an application using the camera is started by a user, the camera function request unit 20 requests start of the camera function to the detection unit 30 including the touch detection unit 31 and the click detection unit 32 and the touch panel display 4. The camera function request unit 20 outputs a signal for starting the camera function to the detection unit 30 including the touch detection unit 31 and the click detection unit 32 and the touch panel display 4 to prepare for input by a user. The imaging display screen 42 is displayed on the touch panel display 4 (S1).

Next, the touch detection unit 31 detects a contact to the operating surface 4a of the touch panel display 4 (S2: detection step), and when a contact of a finger onto the operating surface 4a is detected (YES in S2), for example, the touch detection unit 31 outputs information indicating a contact on the operating surface 4a of the touch panel display 4 and coordinate information of the contact position to the focus control unit 40. Even when a contact of a finger onto the operating surface 4a is not detected (NO in S2), the touch detection unit 31 monitors the presence or absence of a contact of a finger onto the operating surface 4a for a certain period of time.

Then, receiving the information indicating a contact on the operating surface 4a of the touch panel display 4 from the touch detection unit 31, the focus control unit 40 makes control to set a focus on the subject S that is currently displayed on the touch panel display 4 (S3: focus control step). Note that, when information indicating a loss of a contact on the operating surface 4a of the touch panel display 4 (release of a user's finger from the operating surface 4a) is input from the touch detection unit 31, the focus control unit 40 fixes a focus on the currently displayed subject, that is, maintains the state where the subject is focused on in Step S3. Further, when a touch operation is detected again by the touch detection unit 31, the focus control unit 40 controls the focus mechanism 7 of the camera 6 to set a focus on the subject S displayed on the touch panel display 4.

Then, the click detection unit 32 detects a press on the operating surface 4a of the touch panel display 4 (S4: detection step) and, when a click on the operating surface 4a is detected (YES in S4), the click detection unit 32 outputs the focus information output from the focus control unit 40 and click information indicating a click on the operating surface to the shutter control unit 50. Even when a click on the operating surface 4a is not detected (NO in S4), the click detection unit 32 monitors the presence or absence of a click on the operating surface 4a for a certain period of time.

Then, when the shutter control unit 50 receives the focus information output from the focus control unit 40 and the click information from the click detection unit 32, it controls the shutter mechanism 8 of the camera 6 to take a picture (S5: shutter control).

After the function control unit 60 controls the shutter mechanism 8 of the camera 6 and performs picture taking, it determines whether to continue the picture taking (S6). When the picture taking continues by a user, which is when the application using the camera 6 is not terminated (YES in S6), the function control unit 60 outputs a signal requesting to display the imaging display screen 42 again on the touch panel display 4 to the camera function request unit 20.

On the other hand, in Step S6, when the picture taking is finished by a user, which is when the application using the camera 6 is terminated (NO in S6), the function control unit 60 outputs a signal requesting to remove the imaging display screen 42 from the touch panel display 4 to the camera function request unit 20 (S7).

As described above, because the portable terminal 1 according to the first embodiment includes the click mechanism 10 as shown in Fig. 2(a), it is possible to perform not only the touch operation but also the click operation on the touch panel display 4. Because the portable terminal 1 according to the first embodiment controls the shutter mechanism 8 of the camera 6 by detecting the click operation, not the touch operation on the touch panel display 4, the shutter mechanism 8 is not activated even when a finger or the like touching the operating surface 4a for focusing is released from the operating surface 4a, and picture taking is not done. It is thereby possible to easily cancel picture taking even after performing processing to set a focus on the subject S. As a result, it is possible to enhance the user-friendliness of a picture taking operation in the portable terminal 1.

### (Second embodiment)

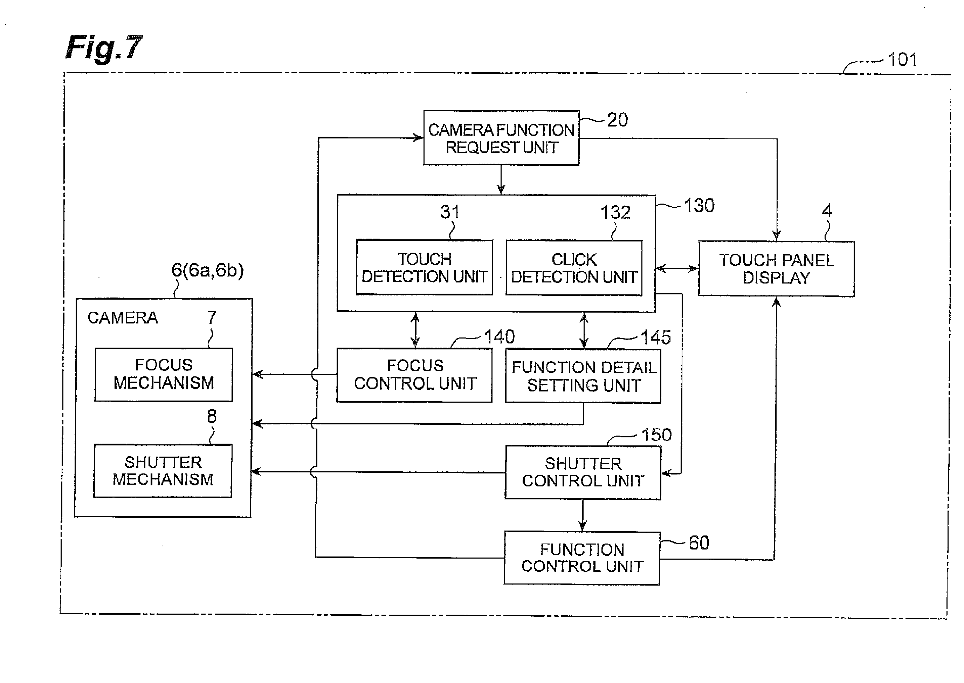

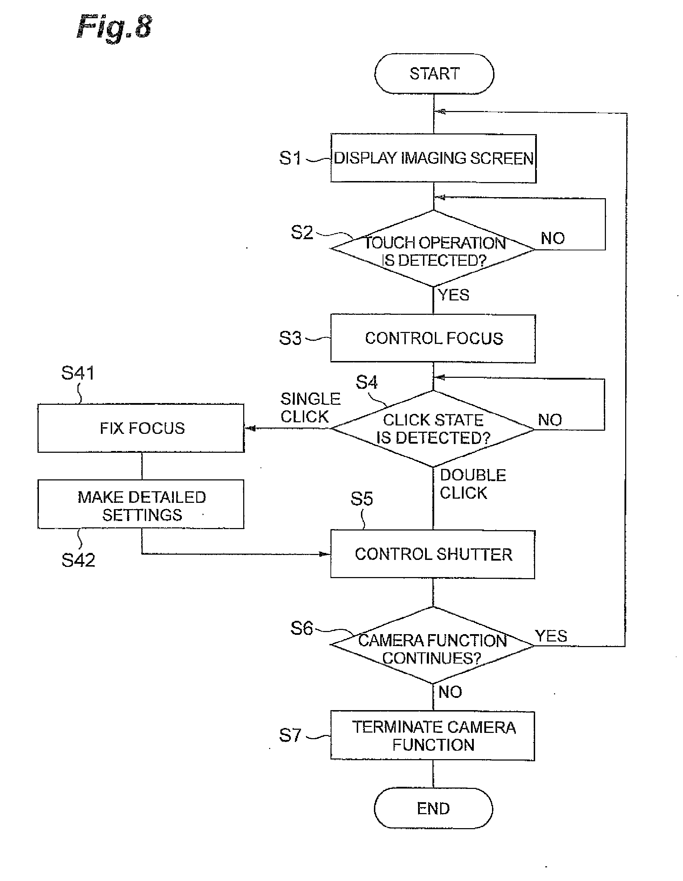

A portable terminal (information terminal) 101 according to a second embodiment is described hereinafter with reference to Figs. 7 and 8. Fig. 7 is a block diagram showing a functional configuration of the portable terminal according to the second embodiment, and Fig. 8 is a flowchart showing a flow of a camera control process in the portable terminal shown in Fig. 7. Note that the elements having the same function as in the portable terminal 1 according to the first embodiment is denoted by the same reference symbol and redundant description thereof is omitted.

The portable terminal 101 according to the second embodiment is different from the portable terminal 1 according to the first embodiment in that it includes a function detail setting unit 145. Further, the functions in a click detection unit 132, a focus control unit 140 and a shutter control unit 150 are different from the functions of the click detection unit 32, the focus control unit 40 and the shutter control unit 50 in the first embodiment. Hereinafter, only those differences are described, and description of the other functions is omitted.

The click detection unit 132 is a part that detects an operation of clicking on the operating surface 4a of the touch panel display 4. This operation can be acquired by using information of the contact sensor 12 or the like included in the click mechanism 10 described above. The click detection unit 132 according to the second embodiment detects a single click and a double click on the operating surface 4a of the touch panel display 4 in distinction from each other. When the click detection unit 132 detects a single click on the operating surface 4a of the touch panel display 4, it outputs information indicating the detection to the focus control unit 140, which is described later. Further, when the click detection unit 132 detects a double click on the operating surface 4a of the touch panel display 4, it outputs information indicating the detection to the shutter control unit 150, which is described later. At this time, the click detection unit 132 also outputs focus information indicating a subject S to be focused on and a focus state output from the focus control unit 140, which is described later, to the shutter control unit 150.

The focus control unit 140 is a part that controls the focus mechanism 7 of the camera 6 to set a focus on the subject S displayed on the touch panel display 4 when a touch operation is detected by the detection unit 130. The focus control unit 140 according to the second embodiment controls the focus mechanism 7 of the camera 6 to set a focus on the subject S that is currently displayed on the touch panel display 4 when a touch operation is detected by the detection unit 130. Further, the focus control unit 140 controls the focus mechanism 7 of the camera 6 to remove a focus set on a specific subject in the previous stage when release of a user's finger from the operating surface 4a is detected by the touch detection unit 31. Note that, when a touch operation is detected again by the detection unit 130, the focus control unit 140 controls the focus mechanism 7 of the camera 6 to set a focus on the subject S displayed on the touch panel display 4.

Further, receiving input from the click detection unit 132, the focus control unit 140 according to the second embodiment sets a focus on the subject S that is currently displayed on the touch panel display 4 and fixes the focus.

The function detail setting unit 145 is a part that, when detailed settings different from focus control, such as an exposure and ISO sensitivity, for example, are made to the subject S, executes the settings. When there are additional detailed settings on the subject S made by a user in the state where a focus is fixed by the focus control unit 140, the function detail setting unit 145 according to the second embodiment can control the camera 6 to execute the settings.

The shutter control unit 150 is a part that controls the shutter mechanism 8 of the camera 6 based on a state of a click on the touch panel display 4 detected by the detection unit 130. The shutter control unit 150 in the portable terminal 101 according to the second embodiment receives a request signal and the focus information output from the click detection unit 132 in response to detection of a double click and controls the shutter mechanism 8 of the camera 6 and thereby takes a picture (performs imaging) with the camera 6.

A flow when performing a control method for a camera (imaging control method) according to the second embodiment is described hereinafter with reference to Fig. 8, mainly for differences from the first embodiment. Fig. 8 is a flowchart showing a flow of a camera control process in the portable terminal according to the second embodiment.

In Step S3 (focus control step), when a touch operation is detected by the detection unit 130, the focus control unit 140 controls the focus mechanism 7 of the camera 6 to set a focus on the subject S that is currently displayed on the touch panel display 4. Further, when release of a user's finger from the operating surface 4a is detected by the touch detection unit 31, the focus control unit 140 according to the second embodiment controls the focus mechanism 7 of the camera 6 to remove a focus set on the specific subject S in the previous stage. Note that, when a touch operation is detected again by the detection unit 130, the focus control unit 140 controls the focus mechanism 7 of the camera 6 to set a focus on the subject S displayed on the touch panel display 4.

In Step S4, the click detection unit 132 according to the second embodiment detects a single click and a double click on the operating surface 4a of the touch panel display 4 in distinction from each other. When the click detection unit 132 detects a single click on the operating surface 4a of the touch panel display 4 (S4: single click), it outputs information indicating the detection to the focus control unit 140.

Then, when the focus control unit 140 receives the information indicating the detection of a single click on the operating surface 4a of the touch panel display 4 from the click detection unit 132, it sets a focus on the subject S that is currently displayed on the touch panel display 4 and fixes the focus (S41).

Then, when there are additional detailed settings such as an exposure and ISO sensitivity on the subject made by a user in the state where a focus is fixed by the focus control unit 140, the function detail setting unit 145 controls the camera 6 to execute the settings (S42).

On the other hand, when the click detection unit 132 detects a double click on the operating surface 4a of the touch panel display 4 (S4: double click), it outputs information indicating the detection to the shutter control unit 150. At this time, the click detection unit 132 also outputs focus information indicating the subject S to be focused on and a focus state output from the focus control unit 140 to the shutter control unit 150. The shutter control unit 150 receives a request signal and the focus information output from the click detection unit 132 in response to detection of a double click and controls the shutter mechanism 8 of the camera 6 and thereby takes a picture (performs imaging) with the camera 6 (S5: shutter control step).

The subsequent flow after Step S6 is the same as that of the portable terminal 1 according to the first embodiment and thus not redundantly described.

As described above, because the portable terminal 101 according to the second embodiment, just like the portable terminal 1 according to the first embodiment, controls the shutter mechanism 8 of the camera 6 based on the click operation on the operating surface 4a of the touch panel display 4, the shutter mechanism 8 is not activated even when a finger or the like touching the touch panel for focusing is released from the touch panel, and picture taking is not done. It is thereby possible to easily cancel picture taking even after performing processing to set a focus on the subject S. As a result, it is possible to enhance the user-friendliness of a picture taking operation.

Further, the portable terminal 101 according to the second embodiment can fix the current focus state by detecting a single click. Thus, even after performing processing of setting a focus on the subject S, it is possible to make detailed settings such as an exposure and ISO sensitivity.

Hereinbefore, the first and second embodiments have been described in detail. However, the present invention is not limited to the above-described embodiment. Various changes and modifications may be made therein without departing from the scope of the invention.

Although the focus control unit 40 controls the focus mechanism 7 of the camera 6 to fix a focus on a subject displayed on the touch panel display 4 when a touch (contact) on an arbitrary position (for example, the shutter button 47 on the imaging display screen 42) of the operating surface 4a of the touch panel display 4 is detected by the detection unit 30 (130) or while the touch is detected in the portable terminal 1 (101) according to the above-described embodiments, the present invention is not limited thereto.

For example, the focus control unit 40 (140) can control the focus mechanism of the camera 6 based on an image displayed on the contact position of the operating surface 4a of the touch panel display 4 which is detected by the touch detection unit 31 (131) in the image (or video) displayed on the touch panel display 4. Thus, the focus control unit 40 (140) in the portable terminal 1 (101) may make control to set a focus on the subject S that is currently displayed on the position of the operating surface 4a touched by a user when the user touches the operating surface 4a of the touch panel display 4. According to the portable terminal 1 (101) of this configuration, it is possible to maintain a focus on the subject S when a user keeps touching the image part corresponding to the subject S to be focused on in the image displayed on the touch panel display 4. It is thereby possible to activate the shutter mechanism 8 of the camera 6 at the moment of a click (double click), for example, in the state where the subject S is focused on, and it is less likely to miss a photo opportunity.

Further, in the above-described embodiments, both of release of a finger from the operating surface 4a and detection of a specified press operation may be detectable, and a focus may be fixed when one of an operation to release a finger from the operating surface 4a and a specified click operation is performed by a user.

Further, although the present invention is applied to the portable terminal in the above-described embodiments, it is not limited thereto, and the present invention may be applied also to a stationary terminal, a PDA and the like.

### Reference Signs List

1....portable terminal (information terminal), 2...device body, 4...touch panel display, 4a...operating surface, 6...camera (imaging device), 6a...front camera, 6a...rear camera, 7...focus mechanism, 8... shutter mechanism, 10...click mechanism (press detection mechanism), 11...support member, 12...contact sensor, 13...board, 20...camera function request unit, 30,130...detection unit (detection means), 31,131...touch detection unit, 32,132...click detection unit, 40,140...focus control unit (focus control means), 42...imaging display screen, 43...image area, 44...focus frame, 46...operation area, 47...shutter button, 48...setting button, 50,150...shutter control unit (shutter control means), 60...function control unit, 61...CPU, 62...main storage unit, 63...auxiliary storage unit, 64...input unit, 65...output unit, 145...function detail setting unit

## Claims

1. An information terminal including an imaging device for image or video taking, comprising:
a touch panel display configured to include a press detection mechanism capable of accepting a press operation on an operating surface and display an image output from the imaging device;
a detection means configured to detect a touch operation that brings a contact object into contact with the operating surface of the touch panel display and a press operation on the operating surface of the touch panel display;
a focus control means configured to control a focus mechanism of the imaging device to set a focus on a subject displayed on the touch panel display when the touch operation is detected by the detection means; and
a shutter control means configured to control a shutter mechanism of the imaging device to perform imaging when a specified press operation is detected by the detection means.

2. The information terminal according to Claim 1, wherein
the focus control means controls the focus mechanism to fix a focus on a subject displayed on the touch panel display when release of the contact object from the operating surface is detected by the detection means.

3. The information terminal according to Claim 1, wherein
the focus control means controls the focus mechanism to fix a focus on a subject displayed on the touch panel display when the specified press operation is detected by the detection means.

4. The information terminal according to any one of Claims 1 to 3, wherein
the detection means detects a contact position on the operating surface where a contact is made by the touch operation, and
the focus control means controls the focus mechanism to set a focus on a subject displayed at the contact position detected by the detection means among subjects displayed on the touch panel display.

5. The information terminal according to Claim 4, wherein
when the contact position detected by the detection means changes, the focus control means controls the focus mechanism in conjunction with the changing contact position.

6. An imaging control method in an information terminal with a touch panel display including a press detection mechanism capable of accepting a press operation on an operating surface and displaying an image output from an imaging device, the method comprising:
a detection step of detecting a touch operation on the operating surface of the touch panel display and a press operation on the operating surface of the touch panel display;
a focus control step of controlling a focus mechanism of the imaging device to set a focus on a subject displayed on the touch panel display when the touch operation is detected in the detection step; and
a shutter control step of controlling a shutter mechanism of the imaging device to perform imaging when a specified press operation is detected in the detection step.
